# EUROPÄISCHE PATENTSCHRIFT

(11) **EP 1 402 232 B1**
(45) Veröffentlichungstag und Bekanntmachung des Hinweises auf die Patenterteilung: **17.11.2004**
(21) Anmeldenummer: 02780824.5
(22) Anmeldetag: 16.05.2002
(51) Int. Cl.: G01C 21/26, G01C 21/34

(54) **VERFAHREN UND VORRICHTUNG ZUR AUSGABE VON DATEN ZU EINEM ATTRIBUT EINER DIGITALEN STRASSENKARTE**
METHOD AND DEVICE FOR OUTPUT OF DATA ON AN ATTRIBUTE ON A DIGITAL STREET MAP
PROCEDE ET DISPOSITIF POUR SORTIR DES DONNEES RELATIVES A UN ATTRIBUT D'UNE CARTE ROUTIERE NUMERIQUE

(30) Priorität: 23.06.2001 DE 10130414
(43) Veröffentlichungstag der Anmeldung: 31.03.2004
(73) Patentinhaber: DaimlerChrysler AG, 70567 Stuttgart (DE)
(72) Erfinder: ENTENMANN, Volker, 71563 Affalterbach (DE); KÜTING, Hans, J., 71686 Remseck (DE)
(86) Internationale Anmeldenummer: PCT/EP2002/005401
(87) Internationale Veröffentlichungsnummer: WO 2003/001154

(56) Entgegenhaltungen:
- EP-A- 0 703 437
- EP-A- 0 803 707
- EP-A- 1 003 018
- WO-A-01/88876
- US-B1- 6 208 935

## Beschreibung

Die Erfindung bezieht sich auf ein Verfahren zur Ausgabe von Daten zu einem Attribut mit festgelegter Position einer digitalen Straßenkarte gemäß dem Oberbegriff von Anspruch 1 und auf eine Vorrichtung zur Durchführung des Verfahrens nach dem Oberbegriff von Anspruch 10.

Die gattungsbildende EP 0 331 675 B1 beschreibt eine Vorrichtung für Fahrzeuge mit einer Ausgabeschaltung für Wegedaten, wobei ein Speicher mit zusätzlichen, sicherheitsrelevanten Daten vorhanden ist. Diese sicherheitsrelevanten Daten werden mit den geographischen Daten des Ortungssystems korreliert und, falls erforderlich, ausgegeben. Weiterhin können aktuelle Fahrdaten, vorzugsweise die Geschwindigkeit, bei der Ausgabe der zusätzlichen Daten berücksichtigt werden.

Die DE 198 31 131 A1 beschreibt ein Verfahren für Fahrzeuge, bei dem ein Fahrer Daten über Ereignisse, die bei der Fahrt auf einem Streckenabschnitt auftreten, abspeichern kann. Während der erstmaligen Befahrung eines Streckenabschnittes kann der Fahrer Daten über auftretende Ereignisse manuell abspeichern. Bei der folgenden Fahrt auf diesem Streckenabschnitt werden die abgespeicherten Daten als Fahrempfehlung ausgegeben.

Die US 6 208 935 B1 beschreibt ein System, das Informationen zu Punkten auf einer Karte ausgibt.

Der Erfindung liegt die Aufgabe zugrunde, das gattungsgemäße Verfahren und die gattungsgemäße Vorrichtungen derart zu verbessern, dass die Verkehrssicherheit gesteigert und der Komfort für den Fahrer erhöht wird.

Diese Aufgabe wird erfindungsgemäß bezüglich des Verfahrens durch die Merkmale des Anspruchs 1 und bezüglich der Vorrichtung durch die Merkmale des Anspruchs 10 gelöst. Die Unteransprüche betreffen vorteilhafte Aus- und Weiterbildungen der Erfindung.

Der Hauptgedanke der Erfindung besteht darin, vor der Ausgabe von Daten zu einem Attribut einer digitalen Straßenkarte zu prüfen, ob Informationen vorhanden sind über wenigstens eine frühere Vorbeifahrt (im Folgenden Informationen genannt) durch einen Fahrzeugführer an der Position dieses Attributes. Für den Fall, das Informationen vorhanden sind, werden diese Informationen ausgewertet, und abhängig vom Ergebnis dieser Auswertung werden die Daten zu dem betreffenden Attribut ausgegeben. In einer für den Fahrzeugführer fremden Umgebung führt eine Ausgabe von Attributdaten zu einer Erhöhung der Verkehrssicherheit, indem sich der Fahrzeugführer frühzeitig auf eine zu bewältigende Verkehrssituation vorbereiten kann. Dagegen wird durch eine Unterdrückung der Ausgabe der Attributdaten auf einer vom Fahrzeugführer häufig befahrenen und somit bekannten Strecke eine Belästigung oder Störung des Fahrzeugführers vermieden. Damit wird in vorteilhafter Weise ein aktueller Bedarf des Fahrzeugführers an Attributdaten berücksichtigt.

Als Attribut einer digitalen Straßenkarte werden hier Merkmale und/ oder Eigenschaften dieser Merkmale verstanden. Merkmale sind in der digitalen Straßenkarte geeignet berücksichtigte Möglichkeiten für örtliche Ausprägungen realer Straßen, wie beispielsweise Straßenklassen oder Verkehrsschilder. Diese Merkmale haben ortsabhängig spezielle Eigenschaften. Beispielsweise kann das Merkmal Verkehrsschild an einer bestimmten Position die Eigenschaft "Vorfahrt achten!" haben.

Besonders vorteilhaft ist eine individuelle Zuordnung von Informationen zu einem Fahrzeugführer. Dies setzt eine eindeutige Identifizierung des Fahrzeugführers voraus, wozu herkömmliche Verfahren verwendet werden können. Für die Identifizierung geeignete Angaben werden gespeichert, z.B. als Teil der Informationen über die Vorbeifahrt an der Position des Attributs. Damit können die Informationen eindeutig einem Fahrzeugführer zugeordnet werden. Bei einer späteren, erneuten Vorbeifahrt an der Position des Attributs werden nur solche vorhandenen Informationen bei der Auswertung berücksichtigt, die eindeutig dem aktuellen Fahrzeugführer zugeordnet werden können.

Vorteilhaft ist es, wenn als Information jede Vorbeifahrt des Fahrzeugführers an der Position des Attributs gezählt und als Anzahl von vorangegangenen Vorbeifahrten gespeichert wird. Diese Information erlaubt eine einfache und effektive Beurteilung, ob ein Bedarf des Fahrzeugführers an Daten über dieses Attribut gegeben ist. Liegt z.B. als Anzahl der vorangegangenen Vorbeifahrten Null vor, ist das Attribut für den Fahrzeugführer neu und es werden die Daten zu diesem Attribut ausgegeben. Ebenfalls möglich ist die Vorgabe einer Maximalanzahl von Vorbeifahrten, um das "Lernen" der Position und/ oder der Eigenschaften des Attributes durch den Fahrzeugführer abzubilden. Solange z.B. diese Maximalanzahl vom Fahrzeugführer nicht erreicht wird, weil er an der Position des Attributs noch nicht entsprechend oft vorbeigefahren ist, werden Daten zu diesem Attribut ausgegeben. Wird die Anzahl überschritten, hat der Fahrzeugführer sich ein Attribut also "eingeprägt", werden keine Daten zu diesem Attribut mehr ausgegeben. Zusätzlich können dem Fahrzeugführer auch weitere Hinweise gegeben werden. So kann beim Erreichen der Maximalanzahl von Vorbeifahrten an der Position des Attributs ein Hinweis ausgegeben werden, dass die Daten zu diesem Attribut ein letztes Mal ausgegeben werden.

Eine vorteilhafte Ausführungsform der Erfindung berücksichtigt bei der Ausgabe der Daten den Zeitpunkt einer letzten Vorbeifahrt an der Position des Attributs. Hierdurch kann auf einfache Weise geprüft werden, ob ein in der digitalen Straßenkarte berücksichtigtes Attribut dem Fahrzeugführer bereits bekannt ist. Denn der Fahrzeugführer wird z.B. auf einer ihm bekannten Strecke Änderungen möglicherweise nicht mit der nötigen Aufmerksamkeit beobachten, sondern sich auf seine bisherigen Erfahrungen mit dieser Strecke und den ihm bekannten Attributen verlassen. So ergibt sich eine Erhöhung der Verkehrssicherheit, indem ein Fahrzeugführer rechtzeitig auf solche Änderungen bei Attributen - wie z.B. die Existenz eines neues Verkehrsschilds - hingewiesen wird, indem die Daten zu diesem Attribut ausgegeben werden. Dazu werden solche Attribute in der digitalen Straßenkarte mit einem Erstellungs- bzw. Änderungszeitpunkt versehen. Es wird z.B. durch einen Vergleich des Zeitpunkts der aktuellen Vorbeifahrt mit dem Zeitpunkt einer letzten Vorbeifahrt des Fahrzeugsführers an der Position des Attributs bestimmt, ob das Attribut mit einem Erstellungs- bzw. Änderungszeitpunkt versehen ist, welcher zwischen diesen beiden Vorbeifahr-Zeitpunkten liegt. In diesem Falle ist das Attribut für den Fahrzeugsführer neu und es werden ihm die Daten ausgegeben. Alternativ kann auch eine spezielle digitale Straßenkarte verwendet werden, in der nur Attribute vorhanden sind die seit einem bestimmten Zeitpunkt erstellt bzw. geändert wurden. Liegt dieser Zeitpunkt z.B. später als der Zeitpunkt einer letzten, vom Fahrzeugführer durchgeführten Fahrt, sind alle Attribute dieser speziellen digitalen Straßenkarte für den Fahrzeugführer neu. Auch wenn die letzte Vorbeifahrt des Fahrzeugsführers an der Position des Attributs länger zurückliegt als eine maximale, vorgebbare Zeitspanne, können die Attributdaten ausgegeben werden. Dabei wird diese maximale Zeitspanne berechnet als Zeitdifferenz zwischen dem Zeitpunkt der aktuellen Vorbeifahrt und dem Zeitpunkt der letzten Vorbeifahrt.

Sehr vorteilhaft ist es, wenn beim Ablegen von Informationen bei der Vorbeifahrt an der Position des Attributs. durch den Fahrzeugführer seine Fahrtrichtung und/ oder sein Fahrtziel erfasst und abgespeichert werden. Dadurch wird eine noch präzisere Auswahl der auszugebenden Attributdaten ermöglicht.

Wenn der Fahrzeugführer sich z.B. einer Kreuzung nähert, ohne dass er ein Navigationssystem nutzt, so ist nicht bekannt, welche Abbiegerichtung er an der Kreuzung wählen wird. Wenn aber bei wenigstens einer letzten Vorbeifahrt an der Position der Kreuzung durch den Fahrzeugführer seine Abbiegerichtung an dieser Kreuzung erfasst und abgespeichert wurde, so kann eine bevorzugte Abbiegerichtung selektiert werden. Anschließend können speziell solche Attributdaten ausgegeben werden, die dieser bevorzugten Abbiegerichtung zugeordnet sind, womit eine Belastung des Fahrzeugführers durch Ausgabe voraussichtlich nicht für ihn relevanter Attributdaten vermieden wird. Weiterhin kann durch die Selektion von Attributen, deren Position der Fahrzeugführer mit großer Wahrscheinlichkeit demnächst passieren wird, eine schnelle und vorteilhafte Auswahl der Attribute vorgenommen werden, zu denen Daten ausgegeben werden.

Bei einer vorteilhaften Ausführungsform der Erfindung werden mittels einer Statistikfunktion die Informationen über die oder jede Vorbeifahrt an der Position eines Attribut der digitalen Straßenkarte abgespeichert. Eine solche Statistikfunktion ermöglicht eine standardisierte Ablage, eine rationelle Speicherung und einen schnellen Zugriff auf die Informationen, da sie besonders geeignet ist für das Speicherformät einer digitalen Straßenkarte. Eine solche Statistikfunktion wird dabei z.B. in die Zugriffsroutinen auf den Datenbestand der digitalen Straßenkarte integriert.

Dabei ist es vorteilhaft, weitere charakterisierende Informationen über die oder jede Vorbeifahrt an der Position des Attributs abzulegen. Dies sind z.B. die Uhrzeit, der Wochentag, die herrschende Wetterbedingung, Tages- und/ oder Fahrtbesonderheiten während einer Vorbeifahrt. Solche weiteren Informationen ermöglichen eine noch zielsichere Datenausgabe, indem eine aktuelle Fahrt noch besser in die Gesamtheit der vom Fahrzeugführer bereits durchgeführten Fahrten eingeordnet werden kann. Dadurch wird eine Beurteilung des Bedarfs des Fahrzeugführers an Attributdaten und damit die Selektion der Attribute, zu denen Daten ausgegeben werden, optimiert.

Eine bevorzugte Ausführungsform der Erfindung nutzt die Statistikfunktion, um die in einer digitalen Straßenkarte vorhandenen Attribute vorbeifahrtabhängig zu klassifizieren und abhängig von dieser Klassifizierung Daten zu diesen Attributen auszugeben. Dabei ist es vorteilhaft, diese Klassifizierung fahrerspezifisch vorzunehmen, um den Bedarf des Fahrzeugführers an Attributdaten individuell zu erfüllen und solche Daten auszugeben, die für den Fahrzeugführer besonders geeignet sind. Hierzu wird die vorgegebene Statistikfunktion durch einen fahrerspezifischen Statistikdatensatz angepasst, z.B. nach durchgeführter Identifizierung des Fahrzeugführers. Die Ausgabe von Daten zu einem Attribut erfolgt z.B. optisch, akustisch und/ oder haptisch. Dabei kann der Fahrzeugführer die Ausgabe nach seinen Bedürfnissen und Wünschen beeinflussen. Beispielsweise kann er die Ausgabe zeitweise unterdrücken, zwischenspeichern oder auf Anforderung abrufen. Auch die Ansteuerung von Assistenzsystemen, die aktiv in den Fahrbetrieb eingreifen, ist möglich.

Eine Vorrichtung zur Ausgabe von Daten zu einem Attribut mit festgelegter Position einer digitalen Straßenkarte umfasst ein Mittel zur Ausgabe der Daten, ein Mittel zur Speicherung von Informationen über eine Vorbeifahrt an der Position des Attributs durch den Fahrzeugführer und eine Verarbeitungseinheit zur Auswertung eventuell im Speichermittel abgelegter Informationen. Die Verarbeitungseinheit, die z.B. als ein Fahrzeugrechner ausgeführt sein kann, gibt weiterhin abhängig vom Ergebnis der Auswertung eventuell im Speichermittel abgelegter Informationen die Ättributdaten dem Fahrzeugsführer durch das Mittel zur Ausgabe aus. Das Mittel zur Speicherung der Informationen ist z.B. als Peripheriekomponente des Fahrzeugrechners ausgeführt. Alternativ wird die Verarbeitungseinheit durch zusätzliche Funktionen einer bereits im Fahrzeug vorhandenen Einheit, z.B. durch ein Steuergerät, realisiert.

Das Ausgabemittel ist z.B. in Form einer Anzeigeeinheit von herkömmlicher Bauart, wie LCD ("Liquid Crystal Display") oder Einspiegelung in die Frontscheibe ("Head-Up Display"), ausgeführt. Ebenfalls möglich sind akustische Ausgaben (z.B. ein Audiosystem) oder haptische Ausgaben (z.B. ein "forcefeedback"- Bedienelement, bei dessen Nutzung eine Gegenkraft am Bedienelement ausgeübt wird). Neben diesen beschriebenen sind eine Vielzahl weiterer Möglichkeiten zur Ausgabe der Daten realisierbar. Weiterhin können die ausgegebenen Daten weiterverarbeitet und anderen Systemen, insbesondere Assistenzsystemen im Fahrzeug, zugeführt werden.

In einer anderen Ausgestaltung der Erfindung, z.B. wenn das Fahrzeug eine Offboard-Navigation nutzt, kann ein Teil der beschriebenen Vorrichtung auch in einer Dienstezentrale (einer zentralen Verarbeitungseinheit mit einer Datenbank, die von Teilnehmern eines entsprechenden Dienstes drahtlos genutzt werden kann) angeordnet sein. Dabei würde das Fahrzeug zumindest Informationen über seine Position z.B. auf Anforderung durch die Zentrale und/ oder durch den Fahrzeugführer an die Zentrale übertragen. Die Zentrale, welche die Verarbeitungseinheit und das Mittel zur Speicherung der Informationen umfasst, würde diese empfangenen Informationen verarbeiten und anschließend die auszugebenden Attributdaten an das Fahrzeug übertragen. Alternativ ist auch eine abweichende Aufteilung der Vorrichtung zwischen der Zentrale und dem Fahrzeug möglich. So kann z.B. nur das Mittel zur Speicherung der Informationen über die Vorbeifahrt an der Position des Attributs durch den Fahrzeugführer in der Zentrale und die Verarbeitungseinheit im Fahrzeug angeordnet sein.

Ein Flussdiagramm sowie eine vorteilhafte Ausführungsform der Erfindung wird anhand einer Zeichnung näher erläutert. Dabei sind einander entsprechende Teile in allen Figuren mit dem gleichen Bezugszeichen versehen. Es zeigen:
- Fig. 1: in schematischer Darstellung ein Blockschaltbild für eine Ausführungsform der Vorrichtung zur Ausgabe von Daten zu einem Attribut einer digitalen Straßenkarte,
- Fig. 2: ein beispielhaftes Flussdiagramm für die Ausgabe von Daten zu einem Attribut einer digitalen Straßenkarte.

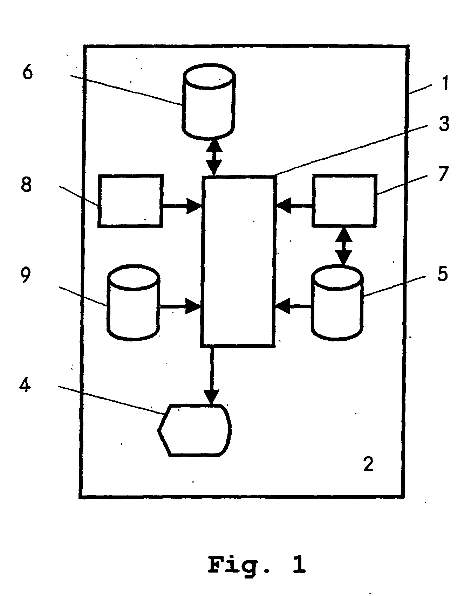

Figur 1 zeigt ein Kraftfahrzeug 1 mit einer Vorrichtung 2 zur Ausgabe von Daten mit einer Verarbeitungseinheit 3. Die Vorrichtung 2 umfasst ein Mittel 4 zur Ausgabe der Daten (im Folgenden kurz Ausgabemittel 4 genannt)zu einem Attribut einer digitalen Straßenkarte 5 und ein Mittel 6 zur Speicherung von Informationen über eine Vorbeifahrt an der Position eines Attributs (im Folgenden kurz Speichermittel 6 genannt). Weiterhin umfasst die Vorrichtung 2 eine Ortungseinrichtung 7, welche auf die digitale Straßenkarte 5 zugreift. Die Ortungseinrichtung 7 ist z.B. Teil eines herkömmlichen Navigationsgeräts. Die Vorrichtung 2 umfasst ebenfalls ein Mittel zur Fahreridentifizierung 8 (im Folgenden kurz Identmittel 8 genannt). Das Identmittel 8 ist z.B. als Fingerprint-Sensor (Erkennung des "Fingerabdrucks" des Fahrzeugführer) mit der Startvorrichtung des Motors verbunden. Wenn der Fahrzeugführer den Startvorgang des Motors einleitet, wird er durch das Identmittel 8 identifiziert. Anschließend wird ein für den Fahrzeugführer vorgesehener Statistikdatensatz aus einem Speicher 9 abgerufen und zur Nutzung durch die Statistikfunktion für den Fahrzeugführer vorgegeben. Alternativ oder zusätzlich ist für die Kombination aus Speicher 9 und Identmittel 8 ein elektronischer Datenträger vorsehbar, den der Fahrzeugführer mit sich führt - z.B. eine fahrerspezifische Chipkarte - und die in eine mit dem Fahrzeug verbundene Vorrichtung eingeführt wird. Auf der Chipkarte sind fahrerspezifische Werte gespeichert, die von der Verarbeitungseinheit 3 ausgewertet werden und die Auswahl eines für den Fahrzeugführer vorgesehenen Statistikdatensatzes bewirken.

Alternativ oder zusätzlich kann der Speicher 9 auch außerhalb des Fahrzeugs vorgesehen sein. Der Speicher 9 ist z.B. in einer Dienstezentrale (eine zentrale Verarbeitungseinheit mit einer Datenbank, die von Teilnehmern eines entsprechenden Dienstes drahtlos genutzt werden kann) vorsehbar. Die Dienstezentrale überträgt beispielsweise einen für den Fahrzeugführer vorgesehenen Statistikdatensatz drahtlos in das Fahrzeug, wenn in dieser Zentrale detektiert wird, dass eine vom Fahrzeugführer mitgeführte Sende- und Empfangseinheit ("Funkschlüssel") den Startvorgang des Fahrzeugs einleitet. Alternativ oder zusätzlich ist in der Dienstezentrale auch das Speichermittel 6 angeordnet.

Die Ortungseinrichtung 7 wird verwendet, um Informationen über die Vorbeifahrt an der Position eines Attributs der digitalen Straßenkarte 5 durch den Fahrzeugführer fährtzielabhängig im Speichermittel 6 abzuspeichern. Dazu wird das erreichte Fahrtziel nach Beendigung der Fahrt von der Ortungseinrichtung 7 bestimmt. Anschließend wird dieses Fahrtziel zusammen mit den Informationen über die Vorbeifahrt an den Positionen der Attribute der aktuell durchgeführten Fahrt durch die Verarbeitungseinheit 3 automatisch abgespeichert. Neben der Anzahl der Vorbeifahrten an der Position des Attributs können auch weitere Informationen gespeichert werden wie z.B. der Zeitpunkt der Vorbeifahrt, Wetterbedingungen oder Fahrtbesonderheiten.

Weiterhin liest die Verarbeitungseinheit 3 im Speichermittel 6 abgelegte Informationen zu einer oder jeder früheren Vorbeifahrt an der Position eines Attributs der digitalen Straßenkarte 5 aus, wertet diese Informationen fahrerspezifisch durch Nutzung des für den Fahrzeugführer vorgesehenen Statistikdatensatzes aus und gibt abhängig vom Ergebnis dieser Auswertung die Daten zu einem Attribut auf dem Ausgabemittel 4 aus. Das Ausgabemittel 4 ist z.B. ein Display. Als weitere Alternative oder zusätzlich ist für das Ausgabemittel 4 eine akustische Ausgabe vorgesehen. Das Speichermittel 6 ist z.B. als Teil der ublichen Peripheriekomponenten der Verarbeitungseinheit 3 in herkömmlicher Bauart ausgebildet.

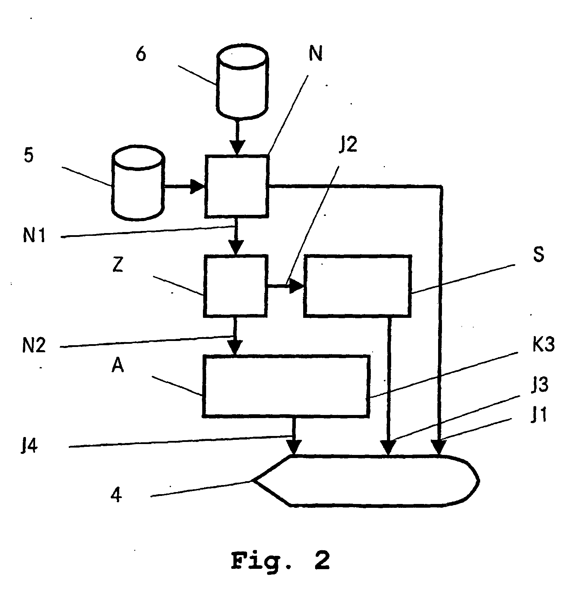

Figur 2 stellt ein beispielhaftes Flussdiagramm für die Ausgabe von Daten zu einem Attribut einer digitalen Straßenkarte 5 durch ein Ausgabemittel 4 dar. Für jedes in der digitalen Straßenkarte 5 abgelegte Attribut wird durch Nutzung der im Speichermittel 6 fahrtziel- und fahrerabhängig abgespeicherten Informationen über die oder jede Vorbeifahrt an der Position des Attributs eine Klassifizierung bewirkt. Der für den Fahrzeugführer vorgesehene Statistikdatensatz verwendet die im Speichermittel 6 abgespeicherten Informationen, den in der digitalen Karte gespeicherten Zeitpunkt einer Attributänderung und den Zeitpunkt der aktuellen Fahrt, um z.B. jedes Attribut fahrerspezifisch in genau eine der folgenden drei Kategorien einzuordnen: "Attribute, die neu sind" ("Kategorie 1"), "Attribute, bei denen die letzte Vorbeifahrt länger als eine bestimmte Zeitdauer zurückliegt und/ oder bei denen ein oberer Grenzwert von Vorbeifahrten noch nicht erreicht wurde" ("Kategorie 2"), und "Attribute, bei denen ein oberer Grenzwert von Vorbeifahrten erreicht wurde" ("Kategorie 3"). Attribute der Kategorie 1 besitzen die höchste Ausgabepriorität, da sie für die sichere Bewältigung der Fahraufgabe am wichtigsten sind. Attribute der Kategorie 3 sind dem Fahrzeugführer bekannt und haben demzufolge die niedrigste Ausgabepriorität. Der Fahrzeugführer wählt nun aus, ob ihm Daten zu allen Attributen ausgegeben werden sollen, also über Attribute der Kategorien 1, 2 und 3, oder ob er eine selektive Ausgabe von Daten zu Attributen wünscht. Für den Fall einer selektiven Datenausgabe kann der Fahrzeugführer wählen, ob ihm Daten zu Attributen der Kategorien 1 und 2 oder nur zu Attributen der Kategorie 1 ausgegeben werden sollen. Daten zu Attributen der Kategorie 3 werden bei der selektive Ausgabe von Attributdaten unterdrückt. Diese Auswahl wird z.B. über einen hierfür geeigneten Schalter oder eine Sprachbedienung vorgesehen.

Sollen nun Daten zu einem Attribut einer digitalen Straßenkarte 5 durch ein Ausgabemittel 4 ausgegeben werden, so wird zuerst in einem Verarbeitungsschritt N durch Nutzung des für den Fahrzeugführer vorgesehenen Statistikdatensatzes geprüft, ob dieses Attribut für den Fahrzeugführer neu ist, ob es also in die Kategorie 1 eingeordnet ist. Wenn das Attribut neu ist, wird ein Signal J1 an das Ausgabemittel 4 gesendet, die Daten zu diesem Attribut auszugeben. Wenn das Attribut nicht neu ist, wird ein Signal N1 an einen Verarbeitungsschritt Z gesendet. Im Verarbeitungsschritt Z wird geprüft, ob die letzte Vorbeifahrt an der Position dieses Attributs länger als eine bestimmte Zeitdauer zurückliegt und/ oder ob ein oberer Grenzwert von Vorbeifahrten noch nicht erreicht wurde, ob das Attribut also in die Kategorie 2 eingeordnet ist. Wenn das Attribut in die Kategorie 2 eingeordnet ist, wird ein Signal J2 an einen Verarbeitungsschritt S gesendet. Im Verarbeitungsschritt S wird geprüft, ob der Fahrzeugführer eine selektive Ausgabe von Attributdaten der Kategorien 1 und 2 eingestellt hat. In diesem Fall wird ein Signal J3 an das Ausgabemittel 4 zur Ausgabe der Attributdaten gesendet. Wenn vom Verarbeitungsschritt Z bestimmt wird, dass das Attribut nicht in die Kategorie 2 eingeordnet ist, wird ein Signal N2 an einen Verarbeitungsschritt A gesendet. Wenn im Verarbeitungsschritt A detektiert wird, dass der Fahrzeugführer eine Ausgabe von Daten zu allen Attributen eingestellt hat, also zu Attributen der Kategorien 1, 2 und 3, so wird ein Signal J4 zur Ausgabe dieser Attributdaten an das Ausgabemittel 4 gesendet.

Die durch Nutzung des für den Fahrzeugführer vorgesehenen Statistikdatensatzes bestimmte Kategorie, in die ein Attribut der digitalen Karte eingeordnet ist, ändert sich mit der Zahl der Vorbeifahrten an der Position dieses Attributs. Wird z.B. ein oberer Grenzwert von Vorbeifahrten an einem in die Kategorie 2 eingeordneten Attribut durch den Fahrzeugführer erreicht, so wird dieses Attribut anschließend in die Kategorie 3 eingeordnet, ist also nicht mehr in der Kategorie 2 eingeordnet. Damit dies vom Fahrzeugführer nicht als Systemfehlfunktion interpretiert wird, kann dem Fahrzeugführer bei der voraussichtlich letzten Ausgabe von Daten zu einem bestimmten Attribut ein Hinweis gegeben werden, dass dieses Attribut zukünftig als "bekannt" angesehen wird.

## Patentansprüche

1. Verfahren zur Ausgabe von Daten zu einem Attribut mit festgelegter Position einer digitalen Straßenkarte,
**dadurch gekennzeichnet,**
**daß** Informationen gespeichert werden über eine Vorbeifahrt durch einen Fahrzeugführer an der Position des Attributs und
vor der Ausgabe der Daten geprüft wird, ob Informationen abgespeichert sind, und
vorhandene Informationen ausgewertet und abhängig vom Ergebnis dieser Auswertung die Daten dem Fahrzeugsführer ausgegeben werden.

2. Verfahren nach Anspruch 1,
**dadurch gekennzeichnet,**
**daß** Angaben gespeichert werden, welcher Fahrzeugführer an der Position des Attributs vorbeifährt und bei der Auswertung nur solche vorhandenen Informationen berücksichtigt werden, welche eindeutig dem aktuellen Fahrzeugführer zugeordnet werden können.

3. Verfahren nach Anspruch 1 oder 2,
**dadurch gekennzeichnet,**
**daß** als Information die Zahl der vorangegangenen Vorbeifahrten an der Position des Attributs bestimmt wird.

4. Verfahren nach einem der Ansprüche 1 bis 3,
**dadurch gekennzeichnet,**
**daß** als Information der Zeitpunkt einer letzten Vorbeifahrt an der Position des Attributs bestimmt wird.

5. Verfahren nach einem der Ansprüche 1 bis 4,
**dadurch gekennzeichnet,**
**daß** die oder jede Vorbeifahrt richtungsabhängig und/ oder nach einem ermittelten Fahrtziel erfasst wird.

6. Verfahren nach einem der Ansprüche 1 bis 5,
**dadurch gekennzeichnet,**
**daß** für zumindest eine Kante oder einen Knoten der digitalen Straßenkarte eine Statistikfunktion vorgesehen ist, anhand derer Informationen aus dem Speicher über die oder jede Vorbeifahrt verarbeitet werden.

7. Verfahren nach Anspruch 6,
**dadurch gekennzeichnet,**
**daß** bei der Statistikfunktion weitere charakterisierende Informationen über die oder jede Vorbeifahrt wie deren Uhrzeit, deren Wochentag, das herrschende Wetter, Tages- und/oder Fahrtbesonderheiten berücksichtigt werden.

8. Verfahren nach Anspruch 6 oder 7,
**dadurch gekennzeichnet,**
**daß** ausgehend von der Statistikfunktion die Attribute vorbeifahrabhängig klassifiziert und abhängig von dieser Klassifikation die Attributinformation ausgegeben wird.

9. Verfahren nach einem der Ansprüche 1 bis 8,
**dadurch gekennzeichnet,**
**daß** die Attributinformation nutzerspezifisch optisch, akustisch und/ oder haptisch ausgegeben und/ oder weiterverarbeitet und anderen Systemen, insbesondere Assistenzsystemen im Fahrzeug, zugeführt wird.

10. Vorrichtung (2) zur Ausgabe von Daten zu einem Attribut mit festgelegter Position einer digitalen Straßenkarte (5)
durch ein Mittel zur Ausgabe (4),
**dadurch gekennzeichnet,**
**daß** ein Speichermittel (6) vorgesehen ist, in dem Informationen über eine Vorbeifahrt durch einen Fahrzeugführer an der Position des Attributs abgelegt werden, und
eine Verarbeitungseinheit (3) vorgesehen ist, die vor der Ausgabe der Daten eventuell im Speichermittel (6) abgelegte Informationen auswertet und abhängig vom Ergebnis dieser Auswertung die Attributinformation dem Fahrzeugsführer durch das Mittel zur Ausgabe (4) ausgibt.

## Claims

1. A process for outputting data on an attribute of a digital street map
with a fixed position,
**characterised in that**
information is stored as a vehicle driver drives past the position of the attribute and
a check is run to ascertain whether there is any stored information before the data is output, and
any existing information is evaluated and the data output for the vehicle is driver dependent on the result of this evaluation.

2. A process in accordance with claim 1,
**characterised in that**
details are stored of which vehicle driver is passing the position of the attribute and the evaluation takes into account only that information which can clearly be associated with the current vehicle driver.

3. A process in accordance with claim 1 or 2,
**characterised in that**
the number of times the position of the attribute has previously been driven past is identified as one item of information.

4. A process in accordance with one of claims 1 to 3,
**characterised in that**
the time at which the position of the attribute was last driven past is identified as one item of information.

5. A process in accordance with one of claims I to 4,
**characterised in that**
when the attribute is driven past the direction of travel and/or any identified destination is recorded.

6. A process in accordance with one of claims 1 to 5,
**characterised in that**
a statistics function is provided for at least one edge or one node of the digital street map and is used to process information from the memory on instances when the attribute has been driven past.

7. A process in accordance with claim 6,
**characterised in that**
the statistics function also takes into account further characterising information on instances when the attribute is driven past, i.e. time, day of the week, prevailing weather, specifics of the day/journey.

8. A process in accordance with claim 6 or 7,
**characterised in that**
based on the statistics function the attribute is classified according to instances on which it has been driven past and the attribute information is output dependent on this classification.

9. A process in accordance with one of claims 1 to 8,
**characterised in that**
the attribute information is output and/or processed user-specifically optically, acoustically and/or haptically and fed to other systems, in particular auxiliary systems in the vehicle.

10. A device (2) for outputting data on an attribute (5) of a digital street map with a fixed position by outputting means (4),
**characterised in that**
storage means (6) are provided in which information on each instance of a driver driving past the position of the attribute is stored and a processing unit (3) is provided which evaluates any information which may be stored in the storage means (6) prior to the outputting of the data and outputs the attribute information to the vehicle drive via the output means (4) depending on the result of this evaluation.

## Revendications

1. Procédé de transmission de données relatives à un attribut, avec une position fixe, d'une carte routière numérique, **caractérisé en ce que** des informations sont enregistrées concernant un passage par un conducteur de véhicule près de la position de l'attribut et **en ce qu'**une vérification est effectuée avant la transmission des données pour savoir si des informations sont stockées et les informations existantes sont analysées et transmises, en fonction du résultat de cette analyse, au conducteur du véhicule.

2. Procédé selon la revendication 1, **caractérisé en ce que** sont enregistrées des informations concernant le conducteur du véhicule qui passe près de la position de l'attribut et **en ce que**, lors de l'analyse, seules les informations qui peuvent être attribuées sans équivoque au conducteur actuel du véhicule sont prises en compte.

3. Procédé selon la revendication 1 ou 2, **caractérisé en ce que** le nombre de passages précédents près de la position de l'attribut est défini en tant qu'information.

4. Procédé selon l'une quelconque des revendications 1 à 3, **caractérisé en ce que** le moment d'un dernier passage près de la position de l'attribut est défini en tant qu'information.

5. Procédé selon l'une quelconque des revendications 1 à 4, **caractérisé en ce que** le passage ou chaque passage est recensé en fonction de la direction et/ou suivant une destination déterminée.

6. Procédé selon l'une quelconque des revendications 1 à 5, **caractérisé en ce que**, pour au moins un bord ou une jonction de la carte routière numérique, on a prévu une fonction statistique au moyen de laquelle des informations provenant de la mémoire sont traitées concernant le passage ou chaque passage.

7. Procédé selon la revendication 6, **caractérisé en ce que**, pour la fonction statistique, d'autres informations caractérisantes concernant le passage ou chaque passage, telles que l'horaire, le jour de la semaine, le temps qu'il fait, les particularités du jour et/ou du trajet, sont prises en compte.

8. Procédé selon la revendication 6 ou 7, **caractérisé en ce qu'**à partir de la fonction statistique, les attributs sont classés en fonction du passage et l'information sur les attributs est transmise en fonction de cette classification.

9. Procédé selon l'une quelconque des revendications 1 à 8, **caractérisé en ce que** l'information sur les attributs est transmise en fonction de l'utilisateur par voie optique, acoustique et/ou haptique et/ou traitée et conduite vers d'autres systèmes, en particulier des systèmes d'assistance situés dans le véhicule.

10. Dispositif (2) de transmission de données relatives à un attribut, avec position fixe, d'une carte routière numérique (5) par le biais d'un moyen de transmission (4), **caractérisé en ce qu'**on a prévu un moyen d'enregistrement (6) dans lequel sont stockées des informations relatives à un passage par un conducteur de véhicule près de la position de l'attribut et une unité de traitement (3) qui analyse les informations éventuellement stockées dans le moyen d'enregistrement (6) avant la transmission des données et transmet, en fonction du résultat de cette analyse, l'information de l'attribut au conducteur du véhicule par le moyen de transmission (4).
